# FASCICULE DE BREVET EUROPEEN

(11) **EP 2 830 319 B1**
(45) Date de publication et mention de la délivrance du brevet: **20.04.2016**
(21) Numéro de dépôt: 14178047.8
(22) Date de dépôt: 22.07.2014
(51) Int. Cl.: H04N 21/2365, H04N 21/236, H04L 5/00, H04N 19/00, H04L 29/06

(54) **SYSTÈME ET PROCÉDÉ DE MULTIPLEXAGE STATISTIQUE DES DONNÉES ET DES FLUX DE DONNÉES VIDÉO DANS UN CANAL DE TRANSMISSION À DÉBIT DONNÉ.**
SYSTEM UND VERFAHREN ZUM MULTIPLEXEN VON NUTZERDATEN UND VIDEODATEN IN EINEM KANAL MIT VORGEGEBENER ÜBERTRAGUNGSRATE.
SYSTEM AND METHOD FOR STATISTICAL MULTIPLEXING OF USER DATA AND VIDEO STREAMS ON A CHANNEL HAVING A PREDETERMINED TRANSMISSION RATE.

(30) Priorité: 24.07.2013 FR 1357281
(43) Date de publication de la demande: 28.01.2015
(73) Titulaire: France Brevets, 75009 Paris (FR)
(72) Inventeur: Cognault, Marc, 35235 Thorigne-Fouillard (FR); Mosset, Jean-Pierre, 35410 Chateaugiron (FR); Le Mouel, Franck, 35340 Erce Pres Liffre (FR)
(74) Mandataire: Dudouit, Isabelle

(56) Documents cités:
- US-A1- 2011 235 654
- REZAEI M ET AL: "Joint Video Coding and Statistical Multiplexing for Broadcasting Over DVB-H Channels", IEEE TRANSACTIONS ON MULTIMEDIA, vol. 10, no. 8, 1 décembre 2008 (2008-12-01), pages 1455-1464, XP011346561, NJ, US ISSN: 1520-9210, DOI: 10.1109/TMM.2008.2007315

## Description

L'objet de l'invention concerne un procédé et un système pour transmettre dans un canal de transmission à débit donné des données simultanément à un ensemble de flux contenant des données vidéo D_{video} et en utilisant le multiplexage statistique. L'invention s'applique dans le cas de flux vidéo.

Le domaine du multimédia numérique fait appel à des méthodes de compression de données afin de rendre possible la transmission de plus de services dans une même largeur de bande. On peut ainsi atteindre un meilleur compromis entre d'une part la qualité de rendu et d'autre part le débit nécessaire pour diffuser ces données sur un réseau.

Il est ainsi connu d'utiliser des techniques d'encodage à débit constant de type CBR (Constant Bit Rate) pour le codage de données. Le mode CBR génère un débit constant prédéfini par l'utilisateur. L'inconvénient de ce mode est que le débit cible choisi correspond au débit maximum nécessaire à la transmission des images les plus complexes. Il en résulte une mauvaise utilisation de la bande passante pour des images de faibles complexités.

Il est aussi connu d'utiliser le mode de codage à débit variable ou VBR (abrégé anglo-saxon de Variable Bit Rate), qui permet de conserver un niveau prédéfini de qualité d'image quelle que soit la complexité d'une scène. L'occupation de la bande passante d'un canal de transmission est ainsi mieux optimisée.

Une autre manière de procéder est d'appliquer le multiplexage statistique pour un ensemble de codeurs. Ceci permet d'attribuer à chaque codeur, un débit variable fonction de la complexité de l'image à coder. Chaque codeur émet une requête de débit vers un allocateur de débit qui renvoie vers les codeurs un débit instantané fonction de l'ensemble des requêtes de tous les codeurs. Le multiplexage statistique peut être du type CBR si la somme des débits alloués est égale au débit canal, ou bien être du type VBR si le débit total est inférieur ou égal à ce canal.

La société Harmonic commercialise un dispositif pour multiplexer des données à des flux vidéo.

La demande de brevet US 2011/235654 décrit un système pour multiplexer des données et un ou plusieurs flux vidéo qui prend en compte la somme des estimations de débit réalisés pour un même niveau de qualité.

Les lettres suivantes seront utilisées dans la description :
- Rc est le débit du canal de transmission, Re est le débit d'entrée des données à multiplexer, Rd est la demande de débit et le débit attribué à des données à multiplexer,
- Rvj : débit attribué à un codeur pour la transmission de flux vidéo, Rv la somme des débits attribués à l'ensemble des codeurs, Qj la requête de débit d'un codeur,
- Di les données à multiplexer, D_{video} les données vidéo ou flux vidéo ou flux contenant des données vidéo.

Le mot « donnée » désigne les données à multiplexer avec les flux vidéo. L'expression « flux vidéo » désigne un flux qui comprend des données incluses dans un service vidéo, des données vidéo, des données audio, du télétex, des données pour les sous-titres ou DVB-Subtitle, etc. Le mot codeur désigne le codeur vidéo.

Le procédé selon l'invention repose notamment sur l'insertion d'un flux de données dans un canal de transmission à débit fixe destiné principalement au transport de signaux issus de codeurs contrôlés par un multiplexeur statistique.

L'invention concerne un système pour multiplexer des données Di et un ou plusieurs flux contenant des données vidéo D_{video} dans un canal de transmission à débit fixé comportant au moins une interface de configuration du système, un multiplexeur et son contrôleur, le multiplexeur comprenant une à n entrées recevant le ou les flux contenant des données vidéo D_{vidéo}, un allocateur de débit, le système est caractérisé en ce que le multiplexeur comporte une entrée pour les données Di à multiplexer, ledit système comporte au moins les éléments suivants : une mémoire recevant les données à multiplexer avec le ou les flux contenant des données vidéo D_{vidéo}, un estimateur de débit qui transmet une demande de débit Rd vers l'allocateur de débit, la demande de débit Rd est transmise au contrôleur du multiplexeur et retardée, par exemple d'une valeur ΔT, le contrôleur est adapté à aller lire dans la mémoire les données Di à multiplexer, à hauteur de la demande de débit Rd.

Le système peut comporter un ou plusieurs des modules suivants :
- un module d'estimation de débit des données en entrée,
- un module de détermination de taux d'occupation de la mémoire par les données à multiplexer,
- un module adapté à calculer le retard mémoire entre les données d'entrée De et les données de sortie Ds transitant dans la mémoire,
le ou lesdits modules transmettant des informations au module estimateur de débit.

Le système peut comporter un élément de mesure instantanée de débit total Rt des flux contenant des données vidéo D_{vidéo} au niveau du contrôleur du multiplexeur, un module du contrôleur recevant le débit total mesuré Rt des flux contenant des données vidéo D_{vidéo}, la demande de débit Rd des données Di, le débit canal Rc, ledit module étant adapté à calculer un débit de données opportuniste Rdop égal au débit canal moins le débit de données déterministe moins le débit total des flux vidéo, Rdop=Rc-Rd-Rt.

L'invention concerne aussi un procédé pour multiplexer simultanément des données Di et un ou plusieurs flux contenant des données vidéo D_{video} dans un canal de transmission à débit fixe Rc en utilisant un système présentant l'une des caractéristiques précédentes, le procédé est caractérisé en ce qu'il comporte au moins les étapes suivantes :
- une demande Rd de débit pour les données Di à multiplexer selon une configuration donnée pour le système est transmise à un allocateur de débit,
- la demande de débit Rd requis est transmise au contrôleur du multiplexeur et retardée d'une valeur de retard ΔT,
- les données à multiplexer Di sont lues par le contrôleur dans une mémoire à hauteur de la demande de débit Rd, les données Di sont transmises au multiplexeur pour être multiplexées avec le ou les flux contenant des données vidéo D_{vidéo}.

Le procédé peut comporter une étape de mesure d'au moins un des paramètres suivants :
- le débit des données en entrée et/ou le taux d'occupation de la mémoire par les données à multiplexer, le retard mémoire entre les données d'entrée De et les données de sortie Ds transitant dans la mémoire,
- les mesures étant transmises au module estimateur de débit.

Selon une variante de réalisation, on mesure le débit total Rt des flux contenant des données vidéo D_{vidéo} et on calcule une valeur de débit de données opportuniste Rdop en tenant compte du débit mesuré du flux vidéo et du débit Rd des données déterministes.

Selon une autre variante de réalisation on réserve un débit pour les données à multiplexer égal au débit en entrée avec un retard fixe déterminé.

Selon une autre variante, on réserve un débit pour les données à multiplexer égal au débit en entrée lissé sur une durée constante donnée.

Il est aussi possible de déterminer le débit réservé pour les données à multiplexer en fonction du taux de remplissage de la mémoire.

Selon une autre variante on choisit le débit réservé pour les données à multiplexer en fonction du retard mesuré des données à multiplexer dans la mémoire. Il est aussi possible de tenir compte du taux de remplissage de la mémoire et du retard des données.

Le flux contenant des données vidéo est un flux vidéo.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un schéma d'une première variante du système selon l'invention, et
- La figure 2, une variante de réalisation de la figure 1 traitant des données déterministes et des données opportunistes.

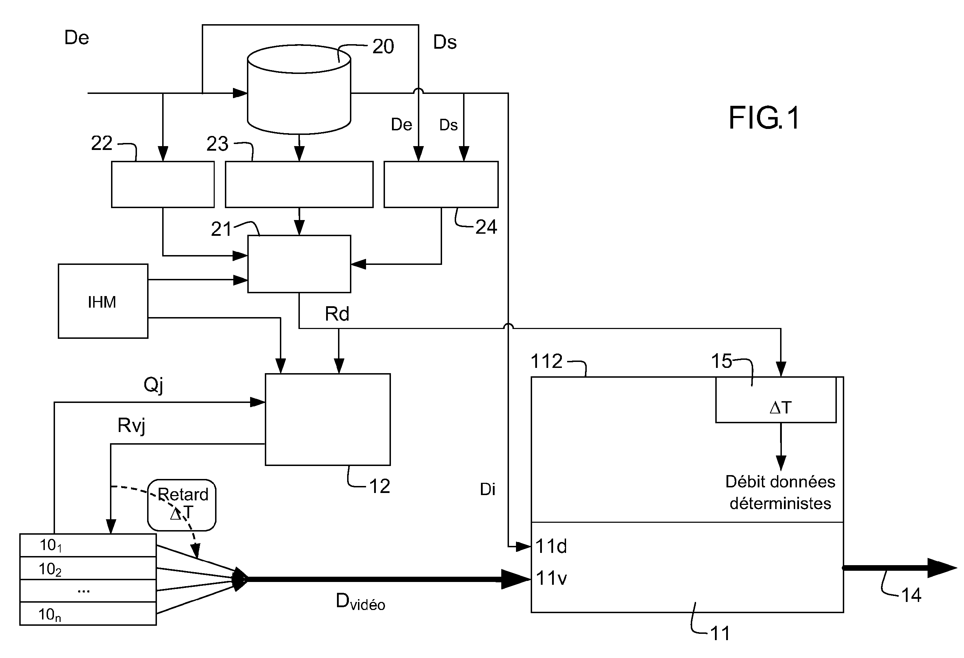

La figure 1 schématise un exemple de système selon l'invention où l'insertion de données dans le canal de sortie est de type déterministe. Le débit attribué aux données est calculé à partir des données contenues dans une mémoire, celui-ci est parfaitement maitrisé et est donc appelé débit déterministe. Le débit est réservé par anticipation. Les données sont reçues par exemple dans un format MPEG qui est compatible avec le format des données issues des codeurs vidéo.

Le système comprend une Interface Homme Machine (IHM) qui va permettre de configurer le système.

Le système comprend un ensemble de codeurs vidéo 10₁, 10₂,...10ₙ en liaison avec un multiplexeur 11 et son contrôleur 112, et un allocateur de débit 12 ayant notamment pour fonction de calculer le débit qui va être alloué à chaque flux. Le multiplexeur 11 comprend n entrées 11v pour les flux vidéo D_{vidéo} et une entrée supplémentaire 11 d des données à multiplexer Di.

L'ensemble de codeurs vidéo 10₁, 10₂,...10ₙ fournit les flux vidéo compressés et les composantes associées. Chaque codeur vidéo 10₁, 10₂,...10ₙ fait une demande Qj de débit vers l'allocateur de débit 12. En retour l'allocateur de débit 12 transmet la valeur de débit Rvj qui est alloué à un codeur vidéo pour transmettre les données vidéo. Les différents flux vidéo issus des codeurs sont transmis, par un moyen approprié, vers le multiplexeur 11 en charge de les multiplexer dans le canal de transmission 14. Il existe un délai, noté ΔT, entre l'instant où un codeur vidéo reçoit un ordre de débit et l'instant où le débit est effectivement égal à cette commande.

Le multiplexeur 11 est adapté à multiplexer les données Dᵢ et les données vidéo D_{vidéo}. Son contrôleur 112 a notamment pour fonction de contrôler le transfert des données Di entre une mémoire 20 dans laquelle sont stockées les données Di et l'entrée 11 d du multiplexeur. Le contrôleur 112 va recevoir le débit requis Rd pour les données Di, et il va réaliser un transfert de données Di entre la mémoire 20 et l'entrée 11 d du multiplexeur avec un retard égal à ΔT pour compenser le retard des codeurs vidéo.

La mémoire 20 permet de mémoriser temporairement les données Di à multiplexer avec les flux vidéo dans le canal de transmission. Les données seront insérées au mieux dans le canal de transmission en fonction de critères liés d'une part à la configuration donnée par un utilisateur et, d'autre part, aux caractéristiques des flux vidéo incidents. La mémoire 20 est en liaison avec un estimateur de débit 21 qui fait une demande de débit Rd vers l'allocateur 12 du multiplexeur 11 de façon similaire à un codeur vidéo. L'estimateur de débit 21 reçoit, par exemple, des informations d'un module 22 d'estimation de débit des données en entrée, et/ou une information d'un module 23 de calcul de taux d'occupation de la mémoire par les données à multiplexer. L'estimateur de débit 21 est aussi en liaison avec un module 24 adapté à calculer le retard mémoire entre les données d'entrée De et les données de sortie Ds, i.e, le temps que mettent les données à transiter dans la mémoire.

La demande de débit Rd est fonction d'une part de l'optimisation du système souhaitée par l'utilisateur et, éventuellement, fonction d'autre part de plusieurs critères qui peuvent être le débit d'entrée Re des données, le taux de remplissage X de la mémoire 20 et/ou le délai Td résultant du temps pris par les données pour traverser la mémoire 20.

La demande de débit Rd est attribuée en priorité par l'allocateur 12 (le débit est imposé à l'allocateur). L'allocateur 12 va répartir entre les codeurs vidéo un débit Rv égal au débit Rc du canal de transmission moins le débit attribué Rd aux données. Il n'y a ainsi pas de pertes dans la transmission de données.

La requête de débit Rd est transmise au contrôleur 112 du multiplexeur qui va ainsi lire dans la mémoire 20, des données Di à hauteur de la demande de débit déterministe dans cet exemple. La demande de débit Rd est retardée de ΔT dans un module de retard 15 pour compenser le retard pris par un codeur vidéo entre l'allocation de débit et la présence effective de ce débit en sortie du codeur de façon à ce que tous les débits (débit de données, débit des flux vidéo) soient en phase à l'entrée du multiplexeur et éviter tout sous ou sur-débit en sortie du multiplexeur.

Le fonctionnement du système en mode déterministe est explicité ci-après.

L'utilisateur configure le mode de fonctionnement du système en fonction du type de données qu'il veut multiplexer avec les flux vidéo. La configuration est réalisée au travers de l'interface homme machine ou IHM et de logiciels qui configurent les différents blocs et modules décrits dans l'invention.

La réservation de débit dans le canal de sortie dans le mode déterministe peut être faite, par exemple, selon cinq modes choisis par l'utilisateur :
- un mode dit LAR dans lequel le débit réservé pour les données Di à multiplexer en sortie de l'estimateur de débit des données à multiplexer est égal au débit en entrée avec un retard fixe déterminé par l'utilisateur,
- un mode LARlissé dans lequel le débit réservé pour les données Di à multiplexer en sortie de l'estimateur de débit est égal au débit en entrée lissé sur une durée constante choisie par l'utilisateur. Plus précisément, la technique de lissage consiste, par exemple, à faire la moyenne des débits en entrée sur une plage temporelle de durée fixe. Le lissage est d'autant plus fort que cette plage temporelle est longue,
- un mode mémoire dans lequel le débit réservé pour les données Di à multiplexer en sortie de l'estimateur de débit est fonction du remplissage mémoire,
- un mode temporel pour lequel le débit réservé pour les données Di à multiplexer en sortie de l'estimateur de débit est fonction du retard mesuré des données à multiplexer dans la mémoire,
- un mode mixte résultant de la combinaison des deux modes mémoire et temporel. La réservation de débit est fonction du remplissage mémoire, si celui est trop faible, les données peuvent mettre un temps excessif pour traverser cette mémoire. Ce défaut est compensé en combinant le mode temporel au mode mémoire.

Par ailleurs, si le multiplexage statistique est du type VBR, il existe des instants où le débit total Rt, c'est-à-dire le débit des codeurs Rv plus le débit déterministe Rd est inférieur au débit du canal Rc, par exemple si plusieurs codeurs transmettent une image fixe au même instant. Il y a donc une opportunité pour ajouter des données supplémentaires que l'on appellera donc opportunistes.

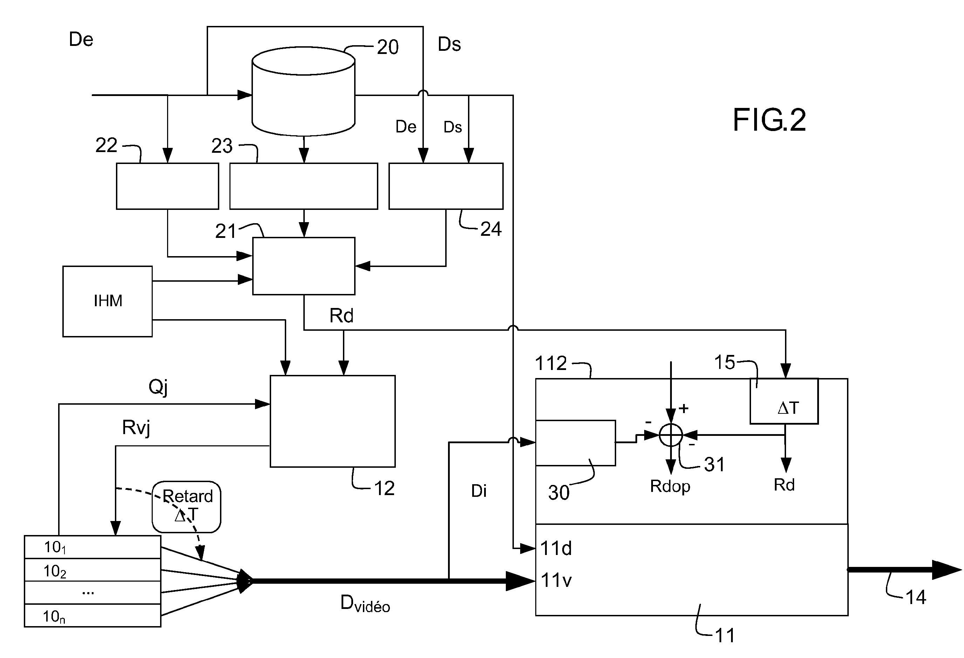

La figure 2 schématise une variante de réalisation permettant d'optimiser la transmission de données. Un élément de mesure instantanée 30 de débit total Rt des flux vidéo est ajouté au niveau du contrôleur 112 du multiplexeur. Un module 31 du contrôleur reçoit la valeur du débit total mesuré Rt des flux vidéo, la valeur de débit des données Rd, la valeur du débit canal Rc. Le module 31 calcule un débit de données opportuniste Rdop égal au débit canal moins le débit de données déterministe moins le débit total des flux vidéo, Rdop=Rc-Rd-Rt. Les données Di à multiplexer avec le flux vidéo correspondent aux données Di selon un mode débit déterministe plus les données Diop avec un débit opportuniste. Le contrôleur 112 du multiplexeur va lire en mémoire 20, ces données et les transmettre vers l'entrée 11 d du multiplexeur 11.

Selon le type de données à transmettre, on va sélectionner le mode approprié:
- pour des données prioritaires à transmettre de façon transparente, par exemple, de la vidéo, on choisit le mode LAR précité ;
- pour des données interactives de la télévision interactive ou iTV pour Interactive télévision: le retard dans le multiplexeur doit être maitrisé, on va travailler en mode LAR lissé;
- dans le cas de données non prioritaires, on sélectionne le mode mixte.

Sans sortir du cadre de l'invention, le procédé peut s'appliquer pour des flux de données temps réel qui ne sont pas des flux vidéo, mais qui contiennent des données vidéo.

Dans le cas d'un système fonctionnant avec toutes les sorties des codeurs à débit nul, afin de remplir tout le canal, le procédé va multiplexer plusieurs voies de données supplémentaires. Une contrainte pour la mise en oeuvre du procédé est que la somme des débits instantanés de toutes ces voies soit inférieure au débit canal.

Le procédé et le système selon l'invention présentent notamment l'avantage de redonner du débit aux flux vidéo, selon un mode choisi en fonction du caractère prioritaire ou non des données sur la vidéo. Ils permettent notamment d'insérer ces données selon plusieurs modes configurables par l'utilisateur en fonction du caractère prioritaire ou non des données sur la vidéo. Les modes de configuration explicités précédemment couvrent toute la gamme de la priorité maximun à la vidéo (respectivement données) à la priorité minimum à la vidéo (respectivement données) tout en garantissant une transmission sans perte des données

## Revendications

1. Système pour multiplexer des données Di et un ou plusieurs flux contenant des données vidéo D_{vidéo} dans un canal de transmission à débit fixé comportant au moins une interface de configuration du système, un multiplexeur (11) et son contrôleur (112), le multiplexeur (11) comprenant une à n entrées (11 v) recevant le ou les flux contenant des données vidéo D_{vidéo}, un allocateur de débit (12), le système est **caractérisé en ce que** le multiplexeur (11) comporte une entrée (11d) pour les données Di à multiplexer, et ledit système comporte au moins les éléments suivants :
une mémoire (20) recevant les données à multiplexer avec le ou les flux contenant des données vidéo D_{vidéo}, un estimateur de débit (21) qui transmet une demande de débit Rd vers l'allocateur de débit (12), la demande de débit Rd est transmise au contrôleur (112) du multiplexeur et retardée, le contrôleur (112) est adapté à aller lire dans la mémoire (20) les données Di à multiplexer, à hauteur de la demande de débit Rd.

2. Système selon la revendication 1 **caractérisé en ce qu'**il comporte un ou plusieurs des modules suivants :
• un module (22) d'estimation de débit des données en entrée,
• un module (23) de calcul du taux d'occupation de la mémoire par les données à multiplexer,
• un module (24) adapté à calculer le retard mémoire entre les données d'entrée De et les données de sortie Ds transitant dans la mémoire,
le ou lesdits modules transmettant des informations au module estimateur de débit (21).

3. Système selon l'une des revendications 1 ou 2 **caractérisé en ce qu'**il comporte un élément de mesure instantanée (30) de débit total Rt des flux contenant des données vidéo D_{vidéo} au niveau du contrôleur (112) du multiplexeur, un module (31) du contrôleur recevant le débit total mesuré Rt des flux contenant des données vidéo D_{vidéo}, la demande de débit Rd des données Di, le débit canal Rc, ledit module (31) étant adapté à calculer un débit de données opportuniste Rdop égal au débit canal moins le débit de données déterministe moins le débit total des flux contenant les données vidéo, Rdop=Rc-Rd-Rt.

4. Système selon l'une des revendications 1 à 3 **caractérisé en ce que** les flux contenant des données vidéo sont des flux vidéo D_{vidéo}.

5. Procédé pour multiplexer simultanément des données Di et un ou plusieurs flux contenant des données vidéo D_{vidéo} dans un canal de transmission à débit fixe Rc en utilisant un système selon l'une des revendications 1 à 4 **caractérisé en ce qu'**il comporte au moins les étapes suivantes :
• une demande Rd de débit pour les données Di à multiplexer selon une configuration donnée pour le système est transmise à un allocateur de débit (12),
• la demande de débit Rd requis est transmise au contrôleur (112) du multiplexeur (11) et retardée d'une valeur de retard ΔT,
• les données à multiplexer Di sont lues par le contrôleur (112) dans une mémoire (20) à hauteur de la demande de débit Rd, les données Di sont transmises au multiplexeur pour être multiplexées avec le ou les flux contenant des données vidéo D_{vidéo}.

6. Procédé selon la revendication 5 **caractérisé en ce qu'**il comporte une étape de mesure d'au moins un des paramètres suivants :
• le débit des données en entrée et/ou le taux d'occupation de la mémoire par les données à multiplexer, le retard mémoire entre les données d'entrée De et les données de sortie Ds transitant dans la mémoire (20),
• les mesures étant transmises au module estimateur de débit (21).

7. Procédé selon l'une quelconque des revendications 5 ou 6 **caractérisé en ce que** l'on mesure le débit total Rt des flux contenant des données vidéo et l'on calcule une valeur de débit de données opportuniste Rdop en tenant compte du débit mesuré du flux contenant des données vidéo et du débit Rd des données déterministes.

8. Procédé selon l'une quelconque des revendications 5 à 7 **caractérisé en ce que** l'on réserve le débit pour les données à multiplexer égal au débit en entrée avec un retard fixe déterminé. 1

9. Procédé selon l'une quelconque des revendications 5 à 7 **caractérisé en ce que** l'on réserve un débit pour les données à multiplexer égal au débit en entrée lissé sur une durée constante donnée.

10. Procédé selon l'une quelconque des revendications 5 à 7 **caractérisé en ce que** l'on détermine le débit réservé pour les données à multiplexer en fonction du taux de remplissage de la mémoire.

11. Procédé selon l'une quelconque des revendications 5 à 7 ou 10 **caractérisé en ce que** l'on choisit le débit réservé pour les données à multiplexer en fonction du retard mesuré des données à multiplexer dans la mémoire.

12. Procédé selon l'une des revendications 5-11 **caractérisé en ce que** le flux contenant des données vidéo est un flux de données vidéo D_{vidéo}.

## Patentansprüche

1. System zum Multiplexieren von Daten Di und einem oder mehreren Videodaten D_{video} enthaltenden Strömen in einem Sendekanal mit festem Durchsatz, umfassend wenigstens eine Systemkonfigurationsschnittstelle, einen Multiplexer (11) und seinen Controller (112), wobei der Multiplexer (11) 1 bis n Eingänge (11v) umfasst, die die ein oder mehreren Videodaten D_{video} enthaltenden Ströme empfangen, einen Durchsatzzuweiser (12), wobei das System **dadurch gekennzeichnet ist, dass** der Multiplexer (11) einen Eingang (11d) für die zu multiplexierenden Daten Di umfasst und das System wenigstens die folgenden Elemente umfasst: einen Speicher (20), der die zu multiplexierenden Daten mit den ein oder mehreren Videodaten D_{video} enthaltenden Strömen empfängt, einen Durchsatzschätzer (21), der eine Durchsatzanforderung Rd zum Durchsatzzuweiser (12) überträgt, wobei die Durchsatzanforderung Rd zum Controller (112) des Multiplexers übertragen und verzögert wird, wobei der Controller (112) zum Lesen, in dem Speicher (20), der zu multiplexierenden Daten Di in der Höhe der Durchsatzanforderung Rd ausgelegt ist.

2. System nach Anspruch 1, **dadurch gekennzeichnet, dass** es ein oder mehrere der folgenden Module umfasst:
• ein Modul (22) zum Schätzen des Datendurchsatzes am Eingang;
• ein Modul (23) zum Berechnen der Belegungsrate des Speichers mit den zu multiplexierenden Daten;
• ein Modul (24) zum Berechnen der Speicherverzögerung zwischen den Eingangsdaten De und den Ausgangsdaten Ds, die durch den Speicher passieren, wobei die ein oder mehreren Module Informationen zu dem Durchsatzschätzmodul (21) senden.

3. System nach Anspruch 1 oder 2, **dadurch gekennzeichnet, dass** es Folgendes umfasst: ein Element (30) zum augenblicklichen Messen des Gesamtdurchsatzes Rt der Videodaten D_{video} enthaltenden Ströme am Controller (112) des Multiplexers, ein Modul (31) des Controllers, das den gemessenen Gesamtdurchsatz Rt der Videodaten D_{video} enthaltenden Ströme, die Durchsatzanforderung Rd der Daten Di, den Kanaldurchsatz Rc empfängt, wobei das Modul (31) zum Berechnen eines Durchsatzes von opportunistischen Daten Rdop ausgelegt ist, die gleich dem Kanaldurchsatz minus dem Durchsatz von deterministischen Daten minus dem Gesamtdurchsatz der die Videodaten enthaltenden Ströme ist, Rdop=Rc-Rd-Rt.

4. System nach einem der Ansprüche 1 bis 3, **dadurch gekennzeichnet, dass** die Videodaten enthaltenden Ströme Videoströme D_{video} sind.

5. Verfahren zum simultanen Multiplexieren von Daten Di und einem oder mehreren Videodaten D_{video} enthaltenden Strömen in einem Übertragungskanal Rc mit festem Durchsatz unter Verwendung eines Systems nach einem der Ansprüche 1 bis 4, **dadurch gekennzeichnet, dass** es wenigstens die folgenden Schritte beinhaltet:
• Senden einer Durchsatzanforderung Rd zu einem Durchsatzzuweiser (12) für die zu multiplexierenden Daten Di gemäß einer gegebenen Konfiguration des Systems;
• Senden der Anforderung für den benötigten Durchsatz Rd zu dem Controller (112) des Multiplexers (11) und Verzögern der Anforderung für den benötigten Durchsatz Rd um einen Verzögerungswert ΔT;
• wobei der Controller (112) in einem Speicher (20) die zu multiplexierenden Daten Di bis zur Höhe der Durchsatzanforderung Rd liest, die Daten zum Multiplexer sendet, um mit den ein oder mehreren Videodaten D_{video} enthaltenden Strömen multiplexiert zu werden.

6. Verfahren nach Anspruch 5, **dadurch gekennzeichnet, dass** es einen Schritt des Messens von wenigstens einem der folgenden Parameter beinhaltet:
• der Durchsatz der Eingangsdaten und/oder die Belegungsrate des Speichers mit den zu multiplexierenden Daten, die Speicherverzögerung zwischen den Eingangsdaten De und den Ausgangsdaten Ds, die durch den Speicher passieren (20);
• Senden der Messwerte zu dem Durchsatzschätzmodul (21).

7. Verfahren nach einem der Ansprüche 5 oder 6, **dadurch gekennzeichnet, dass** der Gesamtdurchsatz Rt der Videodaten enthaltenden Ströme gemessen wird und ein opportunistischer Datendurchsatzwert Rdop unter Berücksichtigung des gemessenen Durchsatzes des Videodaten enthaltenden Stroms und des Durchsatzes Rd der deterministischen Daten berechnet wird.

8. Verfahren nach einem der Ansprüche 5 bis 7, **dadurch gekennzeichnet, dass** der Durchsatz für die zu multiplexierenden Daten gleich dem Eingangsdurchsatz mit einer bestimmten festen Verzögerung reserviert wird.

9. Verfahren nach einem der Ansprüche 5 bis 7, **dadurch gekennzeichnet, dass** ein Durchsatz für die zu multiplexierenden Daten gleich dem Eingangsdurchsatz reserviert wird, geglättet über eine gegebene konstante Dauer.

10. Verfahren nach einem der Ansprüche 5 bis 7, **dadurch gekennzeichnet, dass** der für die zu multiplexierenden Daten reservierte Durchsatz in Abhängigkeit von der Nachfüllrate des Speichers ermittelt wird.

11. Verfahren nach einem der Ansprüche 5 bis 7 oder nach Anspruch 10, **dadurch gekennzeichnet, dass** der für die zu multiplexierenden Daten reservierte Durchsatz in Abhängigkeit von der gemessenen Verzögerung der zu multiplexierenden Daten in dem Speicher gewählt wird.

12. Verfahren nach einem der Ansprüche 5 bis 11, **dadurch gekennzeichnet, dass** der Videodaten enthaltende Strom ein Strom von Videodaten D_{video} ist.

## Claims

1. A system for multiplexing data Di and one or more streams containing video data D_{video} in a fixed bit rate transmission channel, comprising at least one system configuration interface, one multiplexer (11) and its controller (112), said multiplexer (11) comprising one to n inputs (11v) receiving the one or more streams containing video data D_{video}, one bit rate allocator (12), said system being **characterised in that** said multiplexer (11) comprises one input (11d) for the data Di to be multiplexed, and said system comprises at least the following elements: a memory (20) that receives the data to be multiplexed with the one or more streams containing video data D_{video}, a bit rate estimator (21) that transmits a bit rate request Rd to said bit rate allocator (12), said bit rate request Rd is transmitted to said controller (112) of said multiplexer and is delayed, said controller (112) is adapted to read, from said memory (20), the data Di to be multiplexed at the level of said bit rate request Rd.

2. The system according to claim 1, **characterised in that** it comprises one or more of the following modules:
• a module (22) for estimating the bit rate of input data;
• a module (23) for computing the occupancy rate in said memory of the data to be multiplexed;
• a module (24) adapted to compute the memory delay between the input data De and the output data Ds passing through said memory, the one or more module(s) transmitting information to said bit rate estimator module (21).

3. The system according to claim 1 or 2, **characterised in that** it comprises an element (30) for instantaneously measuring the total bit rate Rt of the streams containing video data D_{video} at said controller (112) of said multiplexer, a module (31) of said controller receiving the total measured bit rate Rt of the streams containing video data D_{video}, said bit rate request Rd of the data Di, the channel bit rate Rc, said module (31) being adapted to compute a bit rate of opportunistic data Rdop equal to the channel bit rate less the bit rate of deterministic data less the total bit rate of the streams containing the video data, Rdop=Rc-Rd-Rt.

4. The system according to any one of claims 1 to 3, **characterised in that** the streams containing video data are video streams D_{video}.

5. A method for simultaneously multiplexing data Di and one or more stream(s) containing video data D_{video} in a fixed bit rate transmission channel Rc using a system according to any one of claims 1 to 4, **characterised in that** it comprises at least the following steps:
• transmitting a bit rate request Rd to a bit rate allocator (12) for the data Di to be multiplexed according to a given configuration of the system;
• transmitting the required bit rate request Rd to said controller (112) of said multiplexer (11) and delaying said required bit rate request Rd by a delay value ΔT;
• said controller (112) reading from a memory (20) the data to be multiplexed Di at the level of said bit rate request Rd, transmitting the data Di to said multiplexer in order to be multiplexed with the one or more stream(s) containing video data D_{video}.

6. The method according to claim 5, **characterised in that** it comprises a step of measuring at least one of the following parameters:
• the bit rate of the input data and/or the occupancy rate in said memory of the data to be multiplexed, the memory delay between the input data De and the output data Ds passing through said memory (20);
• transmitting the measurements to said bit rate estimator module (21).

7. The method according to any one of claims 5 or 6, **characterised in that** the total bit rate Rt of the streams containing video data is measured and an opportunistic data bit rate value Rdop is computed taking into account the measured bit rate of the stream containing video data and the bit rate Rd of the deterministic data.

8. The method according to any one of claims 5 to 7, **characterised in that** the bit rate is reserved for data to be multiplexed, which is equal to the input bit rate with a determined fixed delay.

9. The method according to any one of claims 5 to 7, **characterised in that** a bit rate is reserved for data to be multiplexed, which is equal to the input bit rate smoothed over a given constant duration.

10. The method according to any one of claims 5 to 7, **characterised in that** the bit rate reserved for data to be multiplexed is determined as a function of the activity ratio of said memory.

11. The method according to any one of claims 5 to 7 or claim 10, **characterised in that** the bit rate reserved for the data to be multiplexed is selected as a function of the measured delay of the data to be multiplexed in the memory.

12. The method according to any one of claims 5 to 11, **characterised in that** the stream containing video data is a stream of video data D_{video}.
